(19) Europäisches Patentamt
European Patent Office
Office européen des brevets

(11) EP 0 680 978 B1

(12) EUROPÄISCHE PATENTSCHRIFT

(45) Veröffentlichungstag und Bekanntmachung des Hinweises auf die Patenterteilung:
**12.08.1998 Patentblatt 1998/33**

(51) Int Cl.6: **C08F 279/02**, C08F 291/02, C08L 51/04

(21) Anmeldenummer: **95105827.0**

(22) Anmeldetag: **19.04.1995**

(54) **Elastisch-thermoplastische Pfropfpolymerisate und darauf basierende Formmassen**

Elastic thermoplastic graft polymers and moldings therefrom

Polymères greffés élastiques thermoplastiques et matières moulées à partir de ceux-ci

(84) Benannte Vertragsstaaten:
**BE DE ES FR GB IT NL**

(30) Priorität: **02.05.1994 DE 4415336**

(43) Veröffentlichungstag der Anmeldung:
**08.11.1995 Patentblatt 1995/45**

(73) Patentinhaber: **BAYER AG**
**51368 Leverkusen (DE)**

(72) Erfinder: **Eichenauer, Herbert, Dr.**
**D-41539 Dormagen (DE)**

(56) Entgegenhaltungen:
**EP-A- 0 359 464** **EP-A- 0 425 791**
**FR-A- 2 263 260**

- **CHEMICAL ABSTRACTS, vol. 77, no. 2, 10.Juli 1972 Columbus, Ohio, US; abstract no. 6401t, Seite 46; Spalte left; & JP-A-07 141 005 (TORAY) 3.Dezember 1971**

Bemerkungen:
Die Akte enthält technische Angaben, die nach dem Eingang der Anmeldung eingereicht wurden und die nicht in dieser Patentschrift enthalten sind.

EP 0 680 978 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Gegenstand der Erfindung sind elastisch-thermoplastische Pfropfpolymerisate, die durch Emulsionspolymerisation unter Verwendung eines speziellen Initiatorsystems hergestellt werden sowie darauf basierende thermoplastische Formmassen.

Die Herstellung von elastisch-thermoplastischen Pfropfpolymerisaten, z.B. von Pfropfkautschuken aus Vinylmonomeren und Kautschuken durch Emulsionspolymerisation ist bekannt und in zahlreichen Patentschriften, z.B. der EP-B 154 244, beschrieben.

Dabei wird die Pfropfpolymerisation üblicherweise durch Alkali- oder Ammoniumsalze der Peroxidischwefelsäure als Radikalstarter initiiert. Bei den gängigen Einsatzmengen wird mit diesem Initiator in der Regel jedoch kein vollständiger Monomerumsatz erreicht. Man kann zwar die im Polymerlatex enthaltenen Restmonomere entfernen, z.B. durch Latexentgasung (vgl. z.B. DE-OS 2 909 518), dies erfordert jedoch einen zusätzlichen und technisch aufwendigen Verfahrensschritt.

Man hat auch versucht, den Monomerenumsatz bei der Polymerisation und damit die Ausbeute zu erhöhen, z.B durch Anhebung der Reaktionstemperatur, durch Erhöhung der Initiatorkonzentration und durch Zugabe eines Monomeren mit hoher Reaktivität und gutem Copolymerisationsverhalten gegen Ende der Reaktion (vgl. US-PS 3 991 136).

Chem. Abstract, Vol. 77, Nr. 2, 6401t beschreibt allgemein die Verwendung von einem System aus aromatischem Aldehyd und organischem Hydroperoxid, Zimtaldehyd und Diisopropylbenzolhydroperoxid werden speziell genannt.

EP-A-359 464 lehrt die Herstellung hitzebeständiger Polyvinylcopolymerer durch Pfropfpolymerisation eines N-substituierten Maleinimids auf ein Vinylchloridharz.

Alle diese Maßnahmen führen jedoch zu unerwünschten Nebeneffekten: So ergibt die Temperaturerhöhung Produkte mit reduzierten Molekulargewichten und verminderter Zähigkeit, die Erhöhung der Initiatorkonzentration hat die gleiche Wirkung, zusätzlich wird der Farbton im nichteingefärbten Zustand (Rohton) verschlechtert, häufig werden die Emulsionen instabil. Der Zusatz reaktiver Monomerer führt letztlich zu einer Inhomogenität in der Polymerzusammensetzung der gebildeten Produkte, die bei manchen Anwendungen hinderlich sein kann.

Gegenstand der Erfindung sind elastisch-thermoplastische Pfropfpolymerisate, die durch radikalische Emulsionspolymerisation von harzbildenden Vinylmonomeren in Gegenwart von mindestens einem in Latexform vorliegenden Kautschuk unter Verwendung einer Peroxodisulfatverbindung als Initiator und mindestens eines aromatischen Aldehyds im Reaktionsgemisch hergestellt werden, sowie darauf basierende Formmassen. Pfropfpolymerisat bezeichnet hier das Reaktionsprodukt der Pfropfpolymerisation, d.h. im allgemeinen ein Gemisch aus eigentlichem Pfropfpolymerisat und freiem Copolymerisat der Pfropfmonomeren.

Gegenüber den bisher bekannten elastisch-thermoplastischen Pfropfpolymerisaten zeichnen sich die erfindungsgemäßen Polymerisate durch hellere Farbe im nichteingefärbten Zustand (Rohton) und höhere Zähigkeit darauf basierender thermoplastischer Formmassen vom ABS-Typ aus; das Herstellungsverfahren liefert eine höhere Ausbeute.

Als Kautschuk zur Herstellung der erfindungsgemäßen elastisch-thermoplastischen Pfropfpolymerisate eignen sich im Prinzip alle in Emulsionsform vorliegenden kautschukartigen Polymerisate mit einer Glasübergangstemperatur unter 0°C.

Verwendet werden können z.B.

- Dienkautschuke, d.h. Homopolymerisate von konjugierten Dienen mit 4 bis 8 C-Atomen wie Butadien, Isopren, Chloropren oder deren Copolymerisate mit bis zu 60 Gew.-%, bevorzugt bis zu 30 Gew.-% eines Vinylmonomeren z.B. Acrylnitril, Methacrylnitril, Styrol, $\alpha$-Methylstyrol, Halogenstyrole, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol;
- Acrylatkautschuke, d.h. Homo- und Copolymerisate von $C_1$-$C_{10}$-Alkylacrylaten, z.B. Homopolymerisate von Ethylacrylat, Butylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure(ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid bzw. N-Methylolmethacrylamid oder sonstige Verbindungen enthalten, die als Vernetzer wirken, z.B. Divinylbenzol, Triallylcyanurat.

Bevorzugt sind Polybutadienkautschuke, Styrol/Butadien-Copolymer-Kautschuke mit bis zu 30 Gew.-% einpolymerisiertem Styrol und Acrylatkautschuke, besonders solche, die eine Kern-Schalen-Struktur aufweisen, z.B. wie in DE-OS 3 006 804 beschrieben.

Zur Herstellung der erfindungsgemäßen Pfropfpolymerisate kommen Kautschuk-Latices mit mittleren Teilchendurchmessern $d_{50}$ von 0,05 bis 2,0 µm, vorzugsweise von 0,08 bis 1,0 µm und besonders bevorzugt von 0,1 bis 0,5 µm, in Betracht. Die mittleren Teilchendurchmesser werden mittels Ultrazentrifuge (vgl. W. Scholtan, H. Lange: Kolloid-Z.u. Z. Polymere 250, S. 782-796 (1972) bestimmt. Gemische mehrerer Latices können ebenfalls verwendet werden (vergl. DE-OS 1 813 719). Diese Kautschuk-Latices können durch Emulsionspolymerisation hergestellt werden, die

erforderlichen Reaktionsbedingungen, Hilfsstoffe und Arbeitstechniken sind grundsätzlich bekannt.

Es ist auch möglich, nach bekannten Methoden zunächst ein feinteiliges Kautschukpolymerisat herzustellen und es anschließend in bekannter Weise zur Einstellung der erforderlichen Teilchengröße zu agglomerieren. Einschlägige Techniken sind beschrieben (vgl. EP-PS 0 029 613; EP-PS 0 007 810; DD-PS 144 415; DE-AS 1 233 131; DE-AS 1 258 076; DE-OS 2 101 650 US-PS 1 379 391).

Ebenfalls kann nach der sogenannten Saatpolymerisationstechnik gearbeitet werden, bei der zunächst ein feinteiliges Polymerisat, z.B. ein Butadienpolymerisat, hergestellt und dann durch Weiterumsatz mit Monomeren z.B. Butadien enthaltenden Monomerengemischen zu größeren Teilchen weiterpolymerisiert wird.

Prinzipiell kann man Kautschukpolymerisatlatices auch herstellen durch Emulgieren von fertigen Kautschukpolymerisaten in wäßrigen Medien (vgl. japanische Patentanmeldung 55 125 102).

Als Pfropfmonomere, die in Gegenwart der in Emulsionsform vorliegenden kautschukartigen Polymerisate polymerisiert werden, sind praktisch alle Verbindungen geeignet, die in Emulsion zu thermoplastischen Harzen polymerisiert werden können, z.B. Vinylaromaten der Formel (I) oder Verbindungen der Formel (II) bzw. deren Gemische,

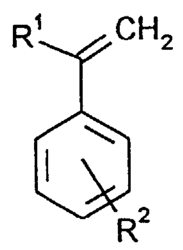

(I)

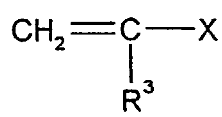

(II)

wobei

$R^1$ Wasserstoff oder Methyl,

$R^2$ Wasserstoff, Halogen oder Alkyl mit 1 bis 4 Kohlenstoffatomen in ortho-, meta- oder para-Stellung,

$R^3$ Wasserstoff oder Methyl und

X eine CN-(Δcyano), $R^4$OOC-(ΔEster) oder $R^5R^6$NOC-(ΔAmid)-gruppe darstellt. Hierbei bedeutet $R^4$ Wasserstoff oder Alkyl mit 1 bis 4 Kohlenstoffatomen; $R^5$ und $R^6$ unabhängig Wasserstoff, Phenyl oder Alkyl mit 1 bis 4 Kohlenstoffatomen.

Beispiele für Verbindungen der Formel I sind Styrol, α-Methylstyrol, p-Methylstyrol und Vinyltoluol. Beispiele für Verbindungen der Formel II sind Acrylnitril und Methylmethacrylat. Weitere geeignete Monomere sind z.B. Vinylacetat und N-Phenylmaleinimid.

Bevorzugte Monomere sind Mischungen aus Styrol und Acrylnitril, α-Methylstyrol und Acrylnitril, aus Styrol, Acrylnitril und Methylmethacrylat sowie Kombinationen dieser Monomerengemische mit N-Phenylmaleinimid.

Bevorzugte erfindungsgemäße Pfropfpolymerisate sind solche, die durch Pfropfpolymerisation von Styrol und Acrylnitril im Gew.-Verhältnis 90:10 bis 50:50, vorzugsweise 80:20 bis 65:35 (wobei Styrol ganz oder teilweise ersetzt werden kann durch α-Methylstyrol oder Methylmethacrylat) in Gegenwart von solchen Mengen Kautschuk, vorzugsweise Polybutadien, erhalten werden, daß Pfropfpolymerisate mit Kautschukgehalten von 20 bis 80 Gew.-%, vorzugsweise 30 bis 75 Gew.-% und besonders bevorzugt 35 bis 70 Gew.-% resultieren.

Als Peroxodisulfatverbindungen werden vorzugsweise Alkalisalze oder das Ammoniumsalz der Peroxodischwefelsäure eingesetzt, besonders bevorzugter Initiator ist Kaliumperoxodisulfat.

Erfindungsgemäß einsetzbare aromatische Aldehyde sind z.B. solche der allgemeinen Formeln (III) und (IV),

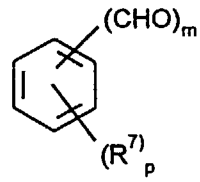

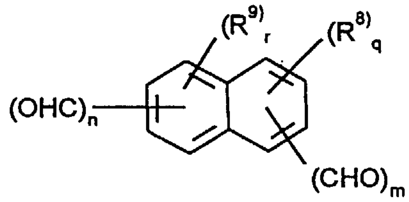

(III) (IV)

m = 1,2
n = 0,1
p,q,r = 0,1,2,3

wobei $R^7$, $R^8$ und $R^9$ unabhängig voneinander Alkylreste mit 1 bis 4 Kohlenstoffatomen, Alkoxyreste mit 1 bis 4 Kohlenstoffatomen und Benzyloxyreste darstellen.

Beispiele für Verbindungen der Formel III sind Benzaldehyd, 2-Methylbenzaldehyd, 3-Methylbenzaldehyd, 4-Methylbenzaldehyd, 2,4,6-Trimethylbenzaldehyd, 2-Methoxybenzaldehyd, 3-Methoxybenzaldehyd, 4-Methoxybenzaldehyd, 2,3-Dimethoxybenzaldehyd, 2,4-Dimethoxybenzaldehyd, 2,5-Dimethoxybenzaldehyd, 3,4-Dimethoxybenzaldehyd, 3,5-Dimethoxybenzaldehyd, 2,3,4-Trimethoxybenzaldehyd, 3,4,5-Trimethoxybenzaldehyd, 2-Ethoxybenzaldehyd, 3-Ethoxybenzaldehyd, 4-Ethoxybenzaldehyd, Benzyloxybenzaldehyd, Phthaldialdehyd, Isophthaldialdehyd, Terephthaldialdehyd.

Beispiele für Verbindungen der Formel IV sind Naphthalin-1-carbaldehyd und Naphthalin-2-carbaldehyd.

Bevorzugte Aldehyde sind Benzaldehyd und 4-Methoxybenzaldehyd, besonders bevorzugt ist Benzaldehyd.

Wesentliches Merkmal der erfindungsgemäßen elastisch-thermoplastischen Pfropfpolymerisate ist, daß die Pfropfpolymerisationsreaktion zu ihrer Herstellung in Gegenwart von mindestens einem aromatischen Aldehyd durchgeführt wird. Dabei kann der aromatische Aldehyd zu jedem beliebigen Zeitpunkt dem Reaktionssystem zugeführt werden.

So kann der Aldehyd vor Beginn der Pfropfreaktion ganz oder teilweise im Kautschuklatex bzw. der wäßrigen Phase emulgiert vorliegen oder im Laufe der Reaktion portionsweise oder kontinuierlich, z.B. zusammen mit den Pfropfmonomeren, zugegeben werden.

Bevorzugt ist eine gemeinsame Vorlage der Peroxodisulfatverbindung und des aromatischen Aldehyds im Reaktor vor oder zu Beginn der Monomerzugabe oder die Vorlage der Peroxodisulfatverbindung im Reaktor vor oder zu Beginn der Monomerzugabe und eine kontinuierliche Zugabe des aromatischen Aldehyds zusammen mit den Pfropfmonomeren, vorzugsweise während der ersten Hälfte der Gesamtmonomerzudosierzeit.

Bei der Herstellung der erfindungsgemäßen elastisch-thermoplastischen Pfropfpolymerisate gemäß dem erfindungsgemäßen Verfahren können die üblicherweise als Molekulargewichtsregler eingesetzten Verbindungen wie z.B. Mercaptane oder dimeres $\alpha$-Methylstyrol verwendet werden.

Als Emulgatoren sind praktisch alle Emulgatortypen (anionische, kationische und nichtionische Emulgatoren) geeignet, bevorzugt werden anionische Emulgatoren eingesetzt.

Geeignete anionische Emulgatoren sind beispielsweise Natrium-, Kalium- oder Ammoniumsalze langkettiger Fettsäuren mit 10 bis 20 Kohlenstoffatomen, z.B. Kaliumoleat, Salze der disproportionierten Abietinsäure, Salze langkettiger Benzolsulfonate, Salze langkettiger Sulfonsäuren, z.B. die Natriumsalze von $C_9$-$C_{18}$-Alkylsulfonsäure-Gemischen und Salze von Dicarbonsäuren auf Basis cyclischer Kohlenwasserstoffgerüste gemäß DE-OS 3 639 904 und DE-OS 3 913 509.

Als Reaktionstemperaturen können beliebig solche Temperaturen gewählt werden, bei denen die eingesetzten Initiatorverbindungen in ausreichendem Maße Radikale zur Auslösung und Aufrechterhaltung der Polymerisationsreaktion liefern. Dieser Temperaturbereich liegt etwa zwischen 50°C und 120°C, vorzugsweise zwischen 55°C und 75°C.

Die Einsatzmengen an erfindungsgemäß einzusetzendem aromatischem Aldehyd sind frei wählbar, im allgemeinen liegen sie bei 0,05 bis 5 Gew.-Teilen, bevorzugt bei 0,08 bis 3 Gew.-Teilen (jeweils bezogen auf 100 Gew.-Teile Monomer); das Gewichtsverhältnis aromatischer Aldehyd: Peroxodisulfatverbindung liegt vorzugsweise zwischen 1:10 und 3:1, besonders bevorzugt zwischen 1:5 und 2:1.

Ein weiterer Erfindungsgegenstand sind thermoplastische Formmassen enthaltend die erfindungsgemäß hergestellten elastisch-thermoplastischen Pfropfpolymerisate.

Zur Erzeugung dieser Formmassen wird das Pfropfpolymerisat mit einem Matrixharz gemischt.

Geeignete Matrixharze bestehen z.B. aus Copolymerisaten des Styrols und Acrylnitrils im Gewichtsverhältnis 90:10 bis 50:50, wobei das Styrol ganz oder teilweise durch $\alpha$-Methylstyrol oder Methylmethacrylat ersetzt werden kann

und wobei gegebenenfalls anteilmäßig bis zu 25 Gew.-%, bezogen auf Matrixharz, ein weiteres Monomeres aus der Reihe Maleinsäureanhydrid, Malein- oder Fumarsäurebisalkylester, Maleinsäureimid, N-(Cyclo)-alkylmaleinimid, N(Alkyl)-phenylmaleinimid, Inden mitverwendet werden kann.

Einzelheiten zur Herstellung dieser Harze sind beispielsweise in der DE-AS 2 420 358, der DE-AS 2 724 360 und der EP-A 255 889 beschrieben. Durch Masse- oder Lösungspolymerisation hergestellte Matrixharze haben sich besonders bewährt. Zur Herstellung der Formmasse kann das Pfropfpolymerisat mit dem Matrixharz auf verschiedene Weise gemischt werden. Erfolgte die Herstellung des Matrixharzes durch Emulsionspolymerisation, so können die Latices gemischt und gemeinsam ausgefällt oder auch getrennt ausgefällt und die resultierenden Festsubstanzen gemischt werden.

Wird z.B. das Matrixharz durch Lösungs- oder Massepolymerisation hergestellt, so muß das Pfropfpolymerisat getrennt ausgefällt werden. Hierzu verwendet man bekannte Verfahren, beispielsweise Zusatz von Salzen oder Säuren, wonach die Fällprodukte gewaschen, getrocknet und gegebenenfalls aus der Pulverform in eine Granulatform überführt werden. Als Mischvorrichtungen für Fällprodukte bzw. Granulate kommen beispielsweise Mehrwalzenstühle, Mischextruder oder Innenkneter in Betracht.

Der Anteil der erfindungsgemäßen elastisch-thermoplastischen Pfropfprodukte an der Gesamtmenge der erfindungsgemäßen Formmassen beträgt 10 bis 65 Gew.-%, wobei der Anteil der Pfropfpolymerisate geringer ist, da nicht alle Monomere Pfropfäste bilden.

Bevorzugte Formmassen haben folgende Zusammensetzung:

| | |
|---|---|
| Pfropfpolymerisat: | 30 bis 60 Gew.-Teile |
| Matrixharze: | 70 bis 40 Gew.-Teile, |

wobei mit Anteilen von 40 bis 60 Gew.-Teilen Pfropfprodukt die höchsten Zähigkeiten erreicht werden.

Den Formmassen der Erfindung können bei der Herstellung, Aufarbeitung, Weiterverarbeitung und Endformung die erforderlichen bzw. zweckmäßigen Additive zugesetzt werden, z.B. Antioxidantien, UV-Stabilisatoren, Peroxidzerstörer, Antistatika, Gleitmittel, Flammschutzmittel, Füll- oder Verstärkerstoffe (Glasfasern, Kohlefasern, etc.) und Farbmittel.

Die Endverformung kann auf handelsüblichen Verarbeitungsaggregaten vorgenommen werden und umfaßt z.B. Spritzgußverarbeitung, Plattenextrusion mit gegebenenfalls anschließender Warmverformung, Kaltverformung, Extrusion von Rohren und Profilen oder Kalander-Verarbeitung.

Weiterhin können die erfindungsgemäß hergestellten Pfropfpolymerisate als Modifikatoren zur Erhöhung der Zähigkeit einzelner oder aus verschiedenen Materialien gemischter thermoplastischer Formmassen dienen. Beispiele für modifizierbare Formmassen sind:

a) Weitere Homo- und Mischpolymerisate von Styrol und alkylsubstituiertem Styrol mit vinylgruppenhaltigen Monomeren, z.B. Polystyrol, Poly(p-methyl)styrol, Poly(styrol-co-maleinsäureanhydrid), Poly(styrol-co-acrylnitril-co-maleinsäure-N-phenylimid), Poly(styrol-co-maleinsäure-N-phenylimid),

b) Homo- und Mischpolymerisate von $C_1$-$C_4$-Alkyl(meth)acrylaten, mit vinylgruppenhaltigen Monomeren, z.B. Polymethylmethacrylat, Poly(methylmethacrylat-co-styrol), Poly(methylmethacrylat-co-maleinsäureanhydrid), Poly (methylmethacrylat-co-styrol-co-maleinsäureanhydrid),

c) halogenhaltige Polymerisate, z.B. Polyvinylchlorid, Polyvinylidenchlorid, chloriertes Polyethylen,

d) Polycarbonate, z.B. auf Basis von Bisphenol A, Tetramethylbisphenol A, Tetrabrombisphenol A,

e) Polyester, z.B. auf Basis Terephthalsäure, Isophthalsäure, Ethylenglykol, Butandiol,

f) Polyamide, z.B. auf Basis ε-Caprolactam, Laurinlactam, Adipinsäure/Hexamethylendiamin.

Dabei werden die erfindungsgemäß hergestellten Pfropfkautschuke in Mengen von 1 bis 80, vorzugsweise 5 bis 50 Gew.-%, bezogen auf die gesamte Formmasse, eingesetzt.

In den folgenden Beispielen sind Teile immer Gewichtsteile und % immer Gew.-%, wenn nicht anders angegeben.

**Beispiele und Vergleichsbeispiele**

**Beispiele 1 bis 12**

55 Gew.-Teile (gerechnet als Feststoff) eines durch radikalische Polymerisation hergestellten anionisch emulgierten Polybutadienlatex mit einem $d_{50}$-Wert von ca. 454 nm wurden mit Wasser auf einen Feststoffgehalt von ca. 20 Gew.-% gebracht, wonach auf 64°C erwärmt und mit einem Gemisch aus 0,5 Gew.-Teilen Kaliumperoxodisulfat (gelöst in Wasser) und 0,2 Gew.-Teilen des in Tabelle 1 angegebenen aromatischen Aldehyd versetzt wurde. Danach wurden 45 Gew.-Teile eines Gemisches aus 72 Gew.-% Styrol und 28 Gew.-% Acrylnitril sowie separat 1 Gew.-Teil (gerechnet als Festsubstanz) des Natriumsalzes eines Harzsäuregemisches (Dresinate 731, gelöst in alkalisch eingestelltem Wasser) über 4 Stunden zudosiert. Nach einer 4-stündigen Nachreaktionszeit wurde der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C im Vakuum getrocknet.

40 Gew.-Teile dieses Pfropfpolymerisats wurden mit 60 Gew.-Teilen eines Styrol/Acrylnitril-Copolymerharzes (72: 28, $\overline{M}_w$ = 115 000, $\overline{M}_w/\overline{M}_n$ -1≤2), 2 Gew.-Teilen Ethylendiaminbisstearylamid und 0,1 Gew.-Teilen eines Silikonöls in einem Innenkneter vermischt und anschließend zu Prüfstäben und zu einer ebenen Platte (zur Beurteilung der Oberfläche) verspritzt.

Folgende Daten wurden ermittelt:

Kerbschlagzähigkeit beim Raumtemperatur ($a_k^{RT}$) und bei -40°C ($a_k^{-40°C}$) nach ISO 180/1A (Einheit: kJ/m$^2$), Kugeldruckhärte ($H_c$) nach DIN 53 456 (Einheit: N/mm$^2$), Wärmeformbeständigkeit (Vicat B) nach DIN 53 460 (Einheit: °C), Oberflächenglanz nach DIN 67 530 bei einem Reflektionswinkel von 60° (Reflektometerwert); die Beurteilung der thermoplastischen Fließfähigkeit erfolgte durch Messung des notwendigen Fülldruckes bei 240°C (Einheit: bar) (siehe F. Johannaber, Kunststoffe 74 (1984), 1, Seiten 2 bis 5).

Die ebenfalls in Tabelle 1 angegebenen Meßwerte zeigen, daß bei Verwendung der erfindungsgemäß hergestellten Pfropfpolymerisate zur Erzeugung der Formmassen Produkt mit verbesserter Zähigkeit und höherer Härte bei unveränderten bzw. leicht verbesserten Werten für Wärmeformbeständigkeit, Oberflächenglanz und thermoplastischer Fließfähigkeit resultieren.

**Tabelle 1**

| Beispiel | Eingesetzter aromatischer Aldehyd | $a_k^{RT}$ (kJ/m²) | $a_k^{-40°C}$ (kJ/m²) | $H_c$ (N/mm²) | Vicat B (°C) | Fülldruck (bar) | Glanz-grad |
|---|---|---|---|---|---|---|---|
| 1. | Benzaldehyd | 42 | 24 | 90 | 99 | 158 | 75 |
| 2. | 4-Methoxybenzaldehyd | 42 | 26 | 88 | 98 | 155 | 77 |
| 3. | 2-Methylbenzaldehyd | 36 | 23 | 87 | 98 | 145 | 77 |
| 4. | 3-Methylbenzaldehyd | 35 | 23 | 87 | 98 | 147 | 77 |
| 5. | Naphthalin-1-carbaldehyd | 36 | 23 | 88 | 99 | 144 | 80 |
| 6. | Naphthalin-2-carbaldehyd | 38 | 24 | 89 | 98 | 145 | 79 |
| 7. | 4-Benzyloxybenzaldehyd | 37 | 24 | 87 | 98 | 144 | 74 |
| 8. | 3,4-Dimethoxybenzaldehyd | 44 | 27 | 89 | 99 | 159 | 77 |
| 9. | 4-Ethoxybenzaldehyd | 37 | 23 | 87 | 99 | 145 | 77 |
| 10. | 3,4,5-Trimethoxybenzaldehyd | 36 | 23 | 88 | 97 | 145 | 79 |
| 11. | Terephthaldialdehyd | 38 | 24 | 88 | 98 | 143 | 79 |
| 12. (Vergleich) | - | 34 | 22 | 83 | 99 | 144 | 76 |

**Beispiele 13 bis 17**

Die bei den Beispielen 1 bis 12 beschriebene Pfropfpolymerisation wurde wiederholt, wobei Kaliumperoxodisulfat und als aromatischer Aldehyd Benzaldehyd in den in Tabelle 2 angegebenen Mengen eingesetzt wurden.

Nach beendeter Polymerisation wurde der Umsatz bestimmt; nach Aufarbeitung und Abmischung mit Styrol/Acrylnitril-Copolymerharz und Additiven (siehe oben) erfolgte Verarbeitung zu Plättchen (60x40x2 mm) bei 280°C und daran Beurteilung des Farbtons.

Dabei wurde nach folgenden Abstufungen differenziert:

-- sehr dunkel
- dunkel
o vergleichbar } jeweils im Vergleich mit Standard (o)
+ hell
++ sehr hell

Die Ergebnisse sind ebenfalls in Tabelle 2 zusammengestellt. Es ist ersichtlich, daß die erfindungsgemäß hergestellten Pfropfpolymerisate mit höherer Ausbeute (höherer Umsatz) erhalten werden und gleichzeitig zu Formmassen mit verbessertem Farbton führen.

Tabelle 2

| Beispiel | Eingesetzte $K_2S_2O_8$-Menge (Gew.-Teile) | Eingesetzte Benzaldehyd-Menge (Gew.-Teile) | Umsatz [%] | Farbton |
|---|---|---|---|---|
| 13. | 0,5 | 0,2 | 99,6 | + |
| 14. | 0,2 | 0,2 | 99,2 | ++ |
| 15. (Vergleich=Standard) | 0,5 | - | 98,6 | o |
| 16. (Vergleich) | 0,75 | - | 99,7 | - |
| 17. (Vergleich) | 0,2 | - | 96,8 | + |

**Patentansprüche**

1. Durch radikalische Emulsionspolymerisation von harzbildenden Vinylmonomeren in Gegenwart von in Latexform vorliegendem Kautschuk unter Verwendung einer Peroxodisulfatverbindung als Initiator und mindestens eines aromatischen Aldehyds hergestellte elastisch-thermoplastische Pfropfpolymerisate.

2. Elastisch-thermoplastische Pfropfpolymerisate gemäß Anspruch 1, aus Styrol, α-Methylstyrol, Acrylnitril, Methylmethacrylat, N-Phenylmaleimid sowie Mischungen daraus als harzbildende Monomere.

3. Elastisch-thermoplastische Pfropfpolymerisate gemäß Anspruch 1, enthaltend Polybutadien als Kautschuk.

4. Elastisch-thermoplastische Pfropfpolymerisate gemäß Anspruch 1, worin der aromatische Aldehyd Benzaldehyd ist.

5. Elastisch-thermoplastische Pfropfpolymerisate gemäß Anspruch 1, worin die Peroxodisulfatverbindung Kaliumpersulfat ist.

6. Thermoplastische Formmassen enthaltend elastisch-thermoplastische Pfropfpolymerisate gemäß Anspruch 1 und mindestens ein thermoplastisches Harz.

7. Thermoplastische Formmassen, gemäß Anspruch 6, worin das thermoplastische Harz ein Copolymerisat aus Styrol und Acrylnitril im Gewichtsverhältnis 90:10 bis 50:50 ist, wobei das Styrol ganz oder teilweise durch α-Methylstyrol oder Methylmethacrylat ersetzt sein kann.

8. Thermoplastische Formmassen, gemäß Anspruch 6, worin als thermoplastisches Harz ein aromatisches Polycarbonat und/oder ein Polyester enthalten ist.

9. Verfahren zur Herstellung von elastisch-thermoplastischen Pfropfpolymerisaten durch radikalisch initiierte Emulsionspolymerisation harzbildender Vinylmonomerer in Gegenwart eines Kautschuklatex, dadurch gekennzeichnet, daß als radikalischer Initiator eine Peroxodisulfatverbindung in Kombination mit einem aromatischen Aldehyd verwendet wird.

**Claims**

1. Elastic thermoplastic graft polymers produced by free-radical emulsion polymerisation of resin-forming vinyl monomers in the presence of rubber in latex form using a peroxydisulphate compound as initiator and at least one aromatic aldehyde.

2. Elastic thermoplastic graft polymers according to claim 1 prepared from styrene, α-methylstyrene, acrylonitrile, methyl methacrylate, N-phenylmaleimide and mixtures thereof as the resin-forming monomers.

3. Elastic thermoplastic graft polymers according to claim 1 containing polybutadiene as the rubber.

4. Elastic thermoplastic graft polymers according to claim 1, in which the aromatic aldehyde is benzaldehyde.

5. Elastic thermoplastic graft polymers according to claim 1 in which the peroxydisulphate compound is potassium persulphate.

6. Thermoplastic moulding compositions containing elastic thermoplastic graft polymers according to claim 1 and at least one thermoplastic resin.

7. Thermoplastic moulding compositions according to claim 6 in which the thermoplastic resin is a copolymer of styrene and acrylonitrile in a ratio by weight of 90:10 to 50:50, wherein the styrene may be entirely or partially replaced by α-methylstyrene or methyl methacrylate.

8. Thermoplastic moulding compositions according to claim 6 in which an aromatic polycarbonate and/or a polyester is present as the thermoplastic resin.

9. Process for the production of elastic thermoplastic graft polymers by free-radically initiated emulsion polymerisation of resin-forming vinyl monomers in the presence of a rubber latex, characterised in that the free-radical initiator used is a peroxydisulphate compound in combination with an aromatic aldehyde.

**Revendications**

1. Polymères greffés élastiques-thermoplastiques, fabriqués par polymérisation en émulsion radicalaire de monomères vinyliques formateurs de résine, en présence d'un caoutchouc présent sous forme de latex, en utilisant un composé de peroxodisulfate comme amorceur et au moins un aldéhyde aromatique.

2. Polymères greffés élastiques-thermoplastiques selon la revendication 1, constitués de styrène, d'α-méthylstyrène, d'acrylonitrile, de méthacrylate de méthyle, de N-phénylmalénimide, ainsi que de mélanges de ceux-ci comme monomères formateurs de résine.

3. Polymères greffés élastiques-thermoplastiques selon la revendication 1, renfermant du polybutadiène comme caoutchouc.

4. Polymères greffés élastiques-thermoplastiques selon la revendication 1, dans lesquels l'aldéhyde aromatique est le benzaldéhyde.

5. Polymères greffés élastiques-thermoplastiques selon la revendication 1, dans lesquels le composé de peroxodisulfate est le persulfate de potassium.

6. Matières moulées thermoplastiques renfermant des polymères greffés élastiques-thermoplastiques selon la revendication 1 et au moins une résine thermoplastique.

7. Matières moulées thermoplastiques selon la revendication 6, dans lesquelles la résine thermoplastique est un copolymère de styrène et d'acrylonitrile dans un rapport pondéral de 90:10 à 50:50, le styrène pouvant être remplacé totalement ou partiellement par l'α-méthylstyrène ou par le méthacrylate de méthyle.

8. Matières moulées thermoplastiques selon la revendication 6, dans lesquelles un polycarbonate aromatique et/ou un polyester sont contenus comme résine thermoplastique.

9. Procédé de fabrication de polymères greffés élastiques-thermoplastiques par polymérisation en émulsion initiée ou amorcée par voie radicalaire, de monomères vinyliques formateurs de résine, en présence d'un latex de caoutchouc, caractérisé en ce que l'on utilise comme initiateur ou amorceur radicalaire, un composé de peroxodisulfate en association avec un aldéhyde aromatique.